# FASCICULE DE BREVET EUROPEEN

(11) **EP 2 544 890 B1**
(45) Date de publication et mention de la délivrance du brevet: **14.02.2018**
(21) Numéro de dépôt: 11707438.5
(22) Date de dépôt: 11.03.2011
(51) Int. Cl.: B32B 15/01, C22F 1/04, B21D 47/04, B21B 1/22, B32B 3/30, B21D 53/04, B23P 15/26, F28D 1/00, B32B 15/18, B23B 3/28, B32B 15/20, C22F 1/00, B32B 5/18

(54) **PROCEDE DE FABRICATION D'UN ASSEMBLAGE METALLIQUE AYANT UNE FEUILLE D'ALUMINIUM TRAITEE THERMIQUEMENT POUR OBTENIR DE L'ALUMINE ALPHA ET UNE AUTRE FEUILLE AVEC DES IRREGULARITES DE SURFACE QUE S'Y INCRUSTENT LORS DU COLAMINAGE.**
VERFAHREN ZUR HERSTELLUNG EINES METALLIC VERBUNDWERKSTOFF MIT EINER WÄRMEBEHANDELTEN ALUMINIUMBLECH UM EINE ALPHA-ALUMINIUMOXIDSCHICHT DARZUSTELLEN UND EIN WEITERES BLECH
METHOD OF MAKING A METALLIC ASSEMBLY HAVING A HEAT-TREATED ALUMINUM SHEET SO AS TO OBTAIN A LAYER OF ALPHA-ALUMINA AND ANOTHER SHEET WITH SURFACE IRREGULARITIES THAT INTERPENETRATE THE ALUMINA WHEN ROLLING

(30) Priorité: 12.03.2010 FR 1051808
(43) Date de publication de la demande: 16.01.2013
(73) Titulaire: Centre National de la Recherche Scientifique (C.N.R.S.), 75016 Paris (FR); CNAM-CONSERVATOIRE NATIONAL DES ARTS ET METIERS, 75003 Paris (FR); Ecole Normale Supérieure de Cachan, 94230 Cachan (FR)
(72) Inventeur: PREVOND, Laurent, F-77270 Villeparisis (FR); COLLARD, Nicolas, F-08300 Rethel (FR); CAPLAIN, Renaud, F-75007 Paris (FR); FRANCOIS, Pierre, F-92120 Montrouge (FR)
(74) Mandataire: Regimbeau
(86) Numéro de dépôt international: PCT/EP2011/053747
(87) Numéro de publication internationale: WO 2011/110685

(56) Documents cités:
- GB-A- 2 326 117
- JP-A- 10 263 801
- US-A- 6 096 145

## Description

L'invention concerne de manière générale la fabrication d'assemblages aluminium-métal.

Plus précisément, l'invention concerne la fabrication d'un ensemble comprenant une feuille d'aluminium et une feuille métallique assemblées et mises en forme de manière à obtenir un assemblage métallique ayant une bonne cohésion.

L'aluminium est un métal malléable, paramagnétique, de faible densité, très conducteur et ayant des propriétés de résistance à l'oxydation remarquables.

Lors de son oxydation avec l'air, il se forme très rapidement en surface une couche fine d'alumine qui permet de le protéger contre la progression de l'oxydation. Cette couche d'alumine naturelle a une épaisseur allant généralement d'un à trois micromètres.

Néanmoins, l'alumine est très isolante, par opposition à l'aluminium, et forme une barrière empêchant notamment le mouillage de l'aluminium sur un autre métal (par exemple sur du fer, de l'acier ou du cuivre).

Certaines applications nécessitent cependant des matériaux ayant à la fois des propriétés de l'aluminium, notamment sa conductivité, sa faible densité, etc. mais aussi des propriétés supplémentaires telles que le magnétisme, la résistance à la rupture, la capacité à être soudé, la rigidité, que peuvent présenter notamment l'acier ou le nickel.

Or la fabrication d'un assemblage comprenant de l'aluminium et du fer est très problématique car ces deux matériaux sont difficiles à allier.

Typiquement, les diagrammes d'équilibre montrent que les alliages aluminium avec des matériaux ferromagnétiques sont possibles, mais ces alliages sont uniquement susceptibles de former des composés prédéterminés, mécaniquement fragiles, et paramagnétiques.

La fabrication et la mise en forme de assemblages métalliques comprenant une feuille (ou tôle) d'aluminium et une feuille (ou tôle) réalisée dans un autre métal, notamment du nickel, du cuivre, du cobalt, ou même de l'aluminium, intéresse également les industriels. En effet, la réalisation de assemblages métalliques légères et rigides nécessite actuellement des assemblages par soudure, collage, etc. qui ne sont pas réalisables aisément avec tous types de métaux, et en particulier avec de l'aluminium.

Par exemple, dans le cas des échangeurs thermiques, on cherche à obtenir des assemblages métalliques rigides, résistantes à la corrosion et de faible densité à moindre coût. Or l'utilisation de plaques d'aluminium du commerce n'est pas adaptée étant données leur malléabilité, et leur assemblage avec d'autres métaux (sous forme de plaque, de poudre, etc.) est rendue difficile par la présence en surface de la couche d'alumine.

De nombreux procédés de fabrication d'assemblages métalliques à base d'aluminium ont été développés, mais tous ont l'inconvénient d'être longs et difficiles à mettre en oeuvre, nécessitent la plupart du temps des installations spécifiques et ont un coût énergétique élevé.

Par exemple, le document US 6 096 14 décrit un procédé de fabrication d'un assemblage métallique au cours duquel on colamine à chaud une feuille d'aluminium et une feuille de plomb pour les souder par diffusion. La feuille d'aluminium peut avoir subi un recuit préalablement au colaminage. L'assemblage est ensuite ondulé.

Le document GB 2 326 117 quant à lui décrit un procédé de fabrication d'un multicouche métallique au cours duquel on ondule simultanément ou successivement plusieurs couches métalliques d'épaisseur donnée afin de les coupler de manière à former un bouclier acoustique.

Un objectif de l'invention est donc de proposer un procédé de fabrication d'un assemblage métallique de faible coût, reproductible, impliquant de faibles dépenses énergétiques et permettant d'obtenir un assemblage métallique qui soit léger tout en ayant une grande rigidité et le cas échéant une bonne résistance à la corrosion.

Pour cela, l'invention propose un procédé de fabrication d'un assemblage métallique comprenant une première feuille à base d'aluminium et au moins une deuxième feuille métallique, comprenant les étapes consistant à :
- traiter thermiquement la feuille d'aluminium en la portant à une température comprise entre 80% et 100% de la température de fusion du matériau la constituant pendant une durée comprise entre une vingtaine de minutes et environ deux heures pour créer et stabiliser une couche d'alumine alpha par transformation allotropique de la couche d'oxyde présente en surface de ladite feuille d'aluminium, puis en la laissant refroidir ;
- prévoir une feuille métallique ayant une ductilité inférieure ou égale à la ductilité de la feuille d'aluminium après refroidissement, ladite feuille présentant des irrégularités de surface d'une profondeur supérieure ou égale à l'épaisseur de la couche d'alumine alpha ; et
- colaminer dans un laminoir la feuille d'aluminium et la feuille métallique (20) afin d'obtenir l'assemblage métallique,
dans lequel le laminoir comprend au moins un cylindre dont la surface externe de laminage est pourvue de reliefs.

Certains aspects préférés mais non limitatifs du procédé de fabrication selon l'invention sont les suivants :
- le colaminage est réalisé à froid,
- le colaminage est réalisé en une seule passe,
- les reliefs sont des sillons ou des croix,
- les sillons sont rectilignes, dentés, crénelés, et/ou sinueux,
- les reliefs s'étendent dans une direction générale parallèle et/ou transverse à la direction de laminage des feuilles dans le laminoir,
- la surface externe de laminage de deux cylindres complémentaires du laminoir présente des reliefs identiques en opposition de phase lors du colaminage,
- seule la surface de l'un des cylindres est pourvue de reliefs, le cylindre en regard étant lisse,
- la feuille métallique est constituée par l'un des éléments du groupe suivant : une grille métallique, un déployé métallique, une mousse métallique, une structure métallique en nids d'abeilles, des câbles métalliques, ou une feuille métallique rugueuse,
- la feuille métallique est réalisée dans l'un des matériaux du groupe suivant : acier, fer, nickel, cobalt, cuivre, métal de structure cristallographique cubique à faces centrées, ou leurs alliages,
- il comprend en outre les étapes suivantes préalablement à l'étape de colaminage des feuilles:
   - chauffer la feuille métallique à une température comprise entre environ 70% et 98% de la température de fusion du métal la constituant pendant une durée déterminée en fonction de l'épaisseur de la feuille ; et
   - laisser refroidir la feuille jusqu'à température ambiante,
- il comprend en outre une étape au cours de laquelle la feuille métallique est décapée entre les étapes de refroidissement et de colaminage,
- la feuille métallique est une feuille d'aluminium supplémentaire, ledit procédé comprenant en outre, préalablement à l'étape de colaminage des feuilles, les étapes suivantes :
   - porter la feuille d'aluminium supplémentaire à une température comprise entre 80% et 100% de la température de fusion du matériau la constituant pendant une durée comprise entre une vingtaine de minutes et environ deux heures pour créer et stabiliser une couche d'alumine alpha à la surface de ladite feuille d'aluminium ; et
   - laisser refroidir la feuille d'aluminium supplémentaire,
- il comprend en outre une étape au cours de laquelle la feuille métallique reçoit un traitement de surface,
- il comprend en outre une étape d'assemblage des feuilles d'aluminium et métallique(s) préalablement à leur colaminage,
- l'étape d'assemblage des feuilles est réalisée par rivetage, soudure par point, prélaminage d'une tête des feuilles, vis auto-perforante, soudage par faisceau d'électron, collage et/ou bridage,
- on colamine en outre une feuille métallique supplémentaire avec les feuilles d'aluminium et métallique,
- les deux feuilles métalliques et la feuille d'aluminium sont colaminées simultanément en une seule étape,
- la feuille d'aluminium et la feuille métallique sont d'abord colaminées dans un laminoir à cylindres lisses afin d'obtenir un assemblage plan, ledit assemblage plan étant ensuite colaminé avec la feuille métallique supplémentaire dans le laminoir à cylindre(s) à reliefs afin d'obtenir l'assemblage métallique,
- il comprend en outre une étape d'application d'une couche de poudre sur la feuille d'aluminium préalablement à l'étape de colaminage,
- la feuille d'aluminium et la poudre sont colaminées dans un laminoir à cylindres lisses afin d'obtenir un assemblage plan, ledit assemblage plan étant ensuite colaminé avec la feuille métallique dans le laminoir comprenant au moins un cylindre dont la surface externe de laminage est pourvue de reliefs afin d'obtenir l'assemblage métallique,
- la poudre est appliquée entre la feuille d'aluminium et la feuille métallique préalablement à l'étape de colaminage, l'assemblage comprenant la feuille d'aluminium, la poudre et la feuille métallique étant ensuite colaminé dans le laminoir, et
- il comprenant en outre une étape supplémentaire de déshydratation de la poudre métallique préalablement à son application sur la feuille d'aluminium.

Selon un deuxième aspect, l'invention propose un procédé de fabrication d'un échangeur thermique, comprenant une étape de mise en forme d'une feuille d'aluminium avec au moins une feuille métallique selon un procédé conforme à l'invention dans un laminoir comprenant un premier cylindre dont la surface externe de laminage présente des sillons s'étendant longitudinalement à la direction de laminage, et un deuxième cylindre dont la surface externe de laminage est lisse ou présente des sillons en opposition de phase avec les sillons du premier cylindre.

Certains aspects préférés mais non limitatifs du procédé de fabrication d'un échangeur thermique sont les suivants :
- la feuille métallique est une feuille de cuivre, de fer ou d'acier, et
- la feuille métallique est une feuille d'aluminium supplémentaire, et le procédé comprend en outre, préalablement à l'étape de colaminage des feuilles, les étapes suivantes :
   - porter la feuille d'aluminium supplémentaire à une température comprise entre 80% et 100% de la température de fusion du matériau la constituant pendant une durée comprise entre une vingtaine de minutes et environ deux heures pour créer et stabiliser une couche d'alumine alpha à la surface de ladite feuille d'aluminium ; et
   laisser refroidir la feuille d'aluminium supplémentaire.

D'autres caractéristiques, buts et avantages de la présente invention apparaîtront mieux à la lecture de la description détaillée qui va suivre, et en regard des dessins annexés, donnés à titre d'exemple, non limitatifs et sur lesquels :
La figure 1 est une vue en coupe transversale d'un premier exemple d'assemblage métallique pouvant être fabriqué selon un procédé conforme à l'invention,
La figure 2 est une vue en coupe longitudinale de l'exemple d'assemblage métallique de la figure 1,
La figure 3 est une vue en coupe transversale d'un deuxième exemple d'assemblage métallique pouvant être fabriqué selon un procédé conforme à l'invention,
La figure 4 est une vue en coupe transversale d'un troisième exemple d'assemblage métallique pouvant être fabriqué selon un procédé conforme à l'invention,
La figure 5 est une vue en coupe transversale d'un quatrième exemple d'assemblage métallique pouvant être fabriqué selon un procédé conforme à l'invention, et
La figure 6 est une vue en coupe transversale d'un cinquième exemple d'assemblage métallique pouvant être fabriqué selon un procédé conforme à l'invention.

Nous allons tout d'abord décrire un procédé général de fabrication d'un assemblage métallique conforme à l'invention, comprenant au moins une feuille d'aluminium 10 et une feuille métallique 20 mises en formes et formant un empilement cohérent.

Ce procédé comprend une étape de traitement thermique de la feuille d'aluminium suivie d'une étape de colaminage dans un laminoir comprenant des cylindres, la surface externe d'au moins l'un des cylindres n'étant pas lisse mais pourvue de reliefs.

Selon une première étape, on effectue une transformation allotropique de la couche d'oxyde présente en surface de la feuille d'aluminium 10.

Pour cela, on porte la feuille d'aluminium 10 à une température comprise entre environ 80% et 100% de la température de fusion de son matériau constitutif pendant une durée suffisamment importante pour stabiliser et homogénéiser ladite couche. Cette étape est réalisée de préférence en ambiance sèche.

De préférence, on chauffe la feuille d'aluminium 10 à une température comprise entre 93% et 98% de la température de fusion, plus préférentiellement encore à une température de l'ordre de 95% (+/- 1%).

Par feuille on comprendra ici une tôle mince (ayant quelques millimètres d'épaisseur), une feuille (ayant quelques microns d'épaisseur), etc. ou toute forme sensiblement plane pouvant être laminée.

La feuille d'aluminium 10 peut, par ailleurs, être réalisée dans de l'aluminium pur, ou dans un alliage d'aluminium.

Néanmoins, l'invention est plus particulièrement adaptée aux tôles d'aluminium ayant une bonne conduction thermique, et pouvant être portées à une température uniforme dans tout son volume. Typiquement, il peut s'agir d'une feuille d'aluminium réalisée dans la série 1000 de la nomenclature internationale (A5 à A9, ...).

Par exemple, la feuille d'aluminium peut être un papier aluminium alimentaire ayant une épaisseur comprise entre 5 et 20 microns chauffée entre 500°C et 660°C.

Pour ces deux exemples de feuille d'aluminium 10, la durée du traitement thermique est alors comprise entre une vingtaine de minutes et environ deux heures, de préférence une trentaine de minutes.

Dans le cas de feuilles d'aluminium 10 d'épaisseur plus importante, typiquement 12 mm, la durée du traitement thermique est alors de préférence de l'ordre de 45 minutes.

Comme nous l'avons dit plus haut, l'épaisseur de la feuille d'aluminium 10 est limitée par les conditions de laminage à quelques millimètres. Mais dans tous les cas, la durée du traitement thermique ne dépasse pas deux heures.

Les durées indiquées ci-dessus sont bien entendu des ordres de grandeur, et peuvent être prolongées selon les conditions de réalisation du traitement thermique, plus particulièrement selon le type et la qualité initiale de l'aluminium utilisé, les caractéristiques du four et l'humidité résiduelle ambiante. En effet, la couche d'alumine alpha peut se dégrader si la durée de traitement est trop prolongée dans de mauvaises conditions.

Le traitement thermique est réalisé de préférence en ambiance sèche, par exemple en préchauffant le four de manière à éliminer l'humidité résiduelle et ainsi éviter l'hydroxydation de la couche d'alumine alpha. Il est alors possible d'augmenter la durée du traitement thermique jusqu'à par exemple quatre heures sans endommager la feuille d'aluminium 10.

La mise en oeuvre d'un four utilisant l'atmosphère extérieure au four pour la ventilation, risque également de donner une couche d'alumine alpha hydroxydée, et donc de moins bonne qualité. De préférence, on utilise donc un four à atmosphère contrôlée si l'on souhaite augmenter la durée du traitement thermique.

La qualité de la couche d'alumine alpha peut également dépendre du type d'aluminium de la feuille 10 et de la qualité du four : plus l'aluminium est pur (comme l'aluminium A9) et moins le four est pollué, plus le traitement thermique de la feuille d'aluminium peut être prolongé sans risquer d'endommager la couche d'alumine alpha.

Par exemple, le traitement thermique d'une feuille d'aluminium constitué d'un alliage A5 dans un four "pollué" pendant quatre heures donne une couche d'alumine alpha qui, bien qu'elle soit stabilisée, est de mauvaise qualité et présente des traces vertes et noires dues à l'interaction des différents matériaux constituant l'alliage A5 avec les métaux du four.

Dans une deuxième étape, on refroidit la feuille d'aluminium 10.

Il faut en effet distinguer le temps nécessaire pour refroidir la feuille d'aluminium 10 et le temps de séjour à la température de stabilisation de la couche d'alumine qui doit être considéré comme essentiel. Le temps de refroidissement et la température finale après refroidissement ne sont en effet pas des caractéristiques déterminantes per se, tant que l'on réduit suffisamment la température de la feuille d'aluminium 10 pour permettre son « laminage à froid » (voir plus loin dans la description).

Il est en effet possible de laisser refroidir la feuille 10 lentement à l'air ou rapidement (par exemple par une trempe), sans que cela n'ait d'influence sur le résultat obtenu.

La température finale de refroidissement peut, par exemple, être la température de la pièce dans laquelle est mis en oeuvre le procédé, typiquement une vingtaine de degrés. Il est cependant possible de refroidir davantage la feuille d'aluminium 10 (par exemple jusqu'à zéro degrés Celsius), ou de moins la refroidir (par exemple jusqu'à une soixantaine de degrés Celsius).

On obtient alors une feuille d'aluminium 10 ayant une résistance à la rupture moins importante que la feuille d'aluminium avant traitement thermique (entre 15 et 20 MPa, au lieu d'une soixantaine avant traitement thermique). Le traitement thermique permet en effet d'augmenter la taille du grain de l'aluminium, facilitant ainsi son travail ultérieur.

Dans une dernière étape, on colamine la feuille d'aluminium 10 avec la feuille métallique 20 choisie dans le laminoir.

Il n'est pas nécessaire de mettre en oeuvre le colaminage immédiatement après le traitement thermique. Par exemple, il est possible de laisser quelques heures voire quelques semaines s'écouler entre le traitement thermique et le colaminage des feuilles.

La feuille métallique 20 doit présenter quant à elle certaines propriétés physiques pour garantir son assemblage cohérent avec la feuille d'aluminium 10 selon le procédé de l'invention.

En particulier, au moins l'une des faces de la feuille métallique 20 doit présenter des irrégularités de surface 21 d'une profondeur supérieure ou égale à l'épaisseur de la couche d'alumine alpha créée lors du traitement thermique de la feuille d'aluminium 10, i.e. typiquement de l'ordre de 5 microns.

Il est important de noter que l'épaisseur de la couche d'alumine reste globalement constante égale à 5 microns (à 1-2 microns près), quelle que soit l'épaisseur de la feuille d'aluminium 10, et ce même si l'on poursuit le traitement thermique au-delà de la durée nécessaire pour la stabiliser. Néanmoins, au-delà de quelques heures (généralement quatre heures), le traitement thermique devient un traitement "d'homogénéisation" : la couche d'alumine alpha se dégrade et les grains la constituant ne sont plus dans un même plan, de sorte son épaisseur finale est modifiée et qu'elle présente des effets noirs et verts.

Par exemple, la feuille métallique 20 peut être un déployé (ou, de manière plus générale, une grille), une structure en nids d'abeilles, les irrégularités de surface 21 étant alors formées par les trous traversants ou obstrués présents dans la feuille 20. Par déployé on entend ici un treillis réalisé d'une seule pièce par découpage et étirage de métal laminé, tandis que par grille on entend par exemple une feuille réalisée par tissage de fils.

Il peut également s'agir d'une mousse métallique dont les pores 21 sont de préférence ouverts et ont un diamètre supérieur ou égal à 5 microns, ou encore d'une feuille métallique dont les rugosités de surface sont d'une taille supérieure ou égale à 5 microns.

D'autres types de feuilles métalliques sont bien entendu utilisables, tant que les irrégularités de surface 21 sont de taille suffisamment importante. Par exemple, il est possible de traiter une feuille métallique 20 à surface lisse de manière à la rendre suffisamment irrégulière pour pouvoir être utilisée dans l'invention, par brossage à la paille de fer, par sablage, par traitement chimique, etc.

La feuille métallique peut également recevoir un traitement de surface par voie humide ou sèche notamment pour augmenter la tenue à la corrosion de la feuille métallique 20 ainsi que certaines de ses caractéristiques physiques, telles que sa conductivité électrique, sa perméabilité magnétique, et modifier son coefficient de frottement.

Par exemple, il est possible d'effectuer un dépôt de nickel sur une feuille métallique 20 en acier afin d'en augmenter la résistance à la corrosion.

La feuille métallique 20 doit en outre être moins ductile que la feuille d'aluminium 10 après traitement thermique, de manière à permettre l'interpénétration de l'aluminium dans les irrégularités de surface 21 de la feuille métallique 20 lors de l'étape de colaminage. Elle peut par exemple être réalisée dans de l'acier, du fer, du nickel, du cobalt, du cuivre, un métal de structure cristallographique cubique à faces centrées (or, cuivre, argent, etc.), ou leurs alliages.

On notera qu'une feuille d'aluminium identique ou similaire à la première feuille d'aluminium et ayant subi le traitement thermique répond bien aux exigences requises pour être utilisée en tant que feuille métallique dans le procédé de fabrication. En effet, le traitement thermique permet d'une part de créer et stabiliser en surface une couche d'alumine alpha ayant une rugosité d'environ 5 microns d'épaisseur (et donc une surface suffisamment irrégulière) et d'autre part de rendre la feuille sensiblement aussi ductile que la première feuille d'aluminium.

Le colaminage de la feuille d'aluminium 10 avec la feuille métallique 20 peut alors être effectué à chaud ou à froid, en une ou plusieurs passes. Cependant, les inventeurs ont remarqué à cet égard que le colaminage à froid (i.e. à température ambiante, sans nouvelle chauffe des feuilles, par exemple entre environ 0°C et 60°C) en une seule passe permettait d'obtenir de bien meilleurs résultats.

En effet, en effectuant plusieurs passes, l'assemblage métallique 1 constitué par la feuille d'aluminium 10 et la feuille métallique 20 risque de se délaminer, tandis qu'en n'effectuant qu'une seule passe, la feuille d'aluminium 10 interpénètre la feuille métallique 20 de manière à former un assemblage métallique 1 cohérent.

Le colaminage peut notamment être effectué à une vitesse comprise entre 0,1 km/h et 3 km/h, avec, par exemple, un taux de réduction de laminage compris entre 2 et 10 environ. Préalablement au colaminage, il est possible d'assembler la feuille d'aluminium 10 et la feuille métallique 20 afin d'éviter que l'assemblage métallique 1 ne se déforme ou qu'il ne dérive lors du colaminage, par exemple par rivetage des feuilles 10 et 20, soudure par points, prélaminage de la tête de l'assemblage 1, vis auto-perforantes, soudage par faisceau d'électron, ou tout système de collage ou de bridage conventionnel.

Contrairement aux préjugés existant dans le domaine de la métallurgie, la soudure par points des feuilles devient en effet possible grâce au traitement thermique subi par la feuille d'aluminium 10, et plus particulièrement grâce à la transformation allotropique et à la stabilisation de la couche d'oxyde.

Par ailleurs, comme vu précédemment, la surface externe d'au moins un cylindre du laminoir comprend des reliefs.

Par exemple, les reliefs ont la forme de sillons, s'étendant parallèlement ou transversalement à la direction de laminage, des croix, etc. Les sillons peuvent être rectilignes (cylindres crénelés) ou au contraire non rectilignes (notamment des sillons dentés, crénelés, sinueux ou une combinaison de ces motifs), uniformes (parois en U de largeur constante) ou non uniformes (parois en U de largeur variable le long de la surface du cylindre), etc.

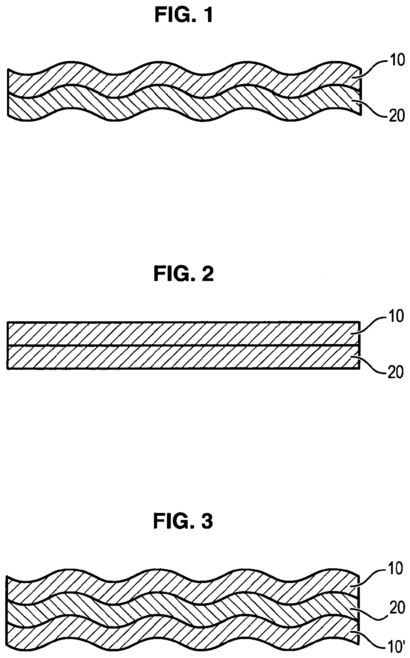

Lorsque deux cylindres adjacents du laminoir sont pourvus de reliefs, ceux-ci peuvent être identiques et en phase, de sorte que les parties saillantes des reliefs soient en regard lors du laminage de l'assemblage. Typiquement, pour des reliefs en forme de sillons rectilignes s'étendant parallèlement à la direction de laminage, on obtient alors un assemblage métallique dans lequel la feuille d'aluminium et la feuille métallique sont assemblées et forment entre elles des sillons s'étendant dans la direction de laminage (voir notamment les figures 1 et 2 annexées).

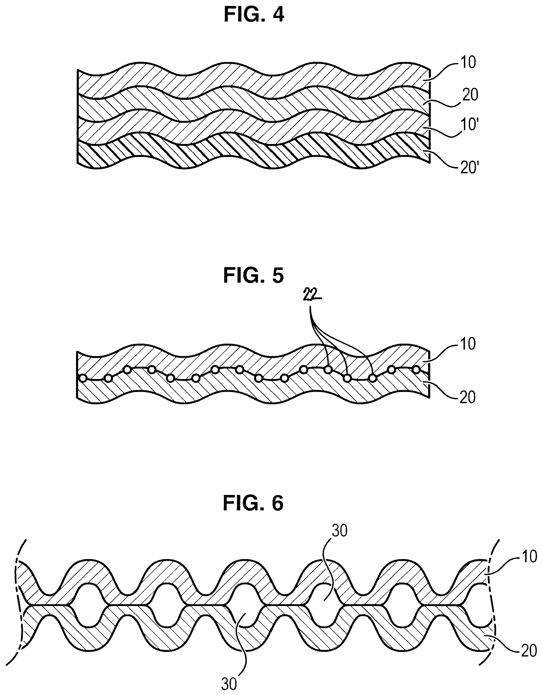

En variante, les reliefs peuvent également être identiques et en opposition de phase. Pour des reliefs en forme de sillons rectilignes s'étendant parallèlement à la direction de laminage, on obtient alors un assemblage métallique comprenant des tubes 30 soudés ensembles, comme illustré sur la figure 6 annexée. Un tel d'assemblage peut alors notamment être mis en oeuvre dans la fabrication d'un échangeur thermique.

De manière générale, ces assemblages métalliques présentent une grande rigidité dans la direction du laminage, une faible densité et une résistance accrue à la corrosion (de par l'utilisation d'aluminium).

Plus généralement, le choix des reliefs est guidé par l'application de l'assemblage métallique. En effet, la mise en oeuvre de reliefs et des matériaux pour la feuille métallique 20 s'étendant dans une direction générale donnée rigidifie l'assemblage métallique dans cette direction. Par exemple, lorsque les cylindres sont crénelés, les reliefs étant alors des sillons rectilignes parallèles à la direction de laminage, le colaminage confère une grande rigidité à l'assemblage métallique final dans cette direction. Par ailleurs, la mise en oeuvre de reliefs ayant deux directions d'extension, tels que des sillons dentés, sinusoïdaux ou crénelés, ou encore des croix, permet d'obtenir des assemblages métalliques rigidifiés à la fois dans les directions parallèle et transverse à la direction de laminage.

L'épaisseur finale de l'assemblage métallique dépend des épaisseurs initiales des feuilles d'aluminium et métallique, des reliefs des cylindres ainsi que des contraintes appliquées dans le laminoir.

La couche d'alumine alpha joue en outre un rôle de lubrifiant lors du colaminage de l'assemblage métallique 1, et permet d'augmenter sensiblement la résistance à la corrosion de l'aluminium.

On obtient alors un assemblage métallique 1 présentant des propriétés remarquables telles qu'une résistance accrue à la corrosion et aux efforts de traction, un rapport résistance mécanique sur poids élevé, une gamme de température d'utilisation plus étendue que celle de l'aluminium pur (entre environ -200°C et +200°C pour un assemblage aluminium-fer), ou encore une conductivité semblable à la conductivité de l'aluminium avant traitement thermique. L'assemblage métallique 1 peut en outre recevoir des traitements de surface, être embouti ou mis en forme, soudé, etc. comme toute autre tôle métallique conventionnelle.

Enfin, l'assemblage métallique peut comprendre plusieurs feuilles métalliques différentes ou identiques. Ces feuilles sont alors de préférence colaminées directement ensemble, en une seule passe et à froid.

En variante, l'assemblage métallique peut être renforcé par l'ajout d'une couche de poudre métallique que l'on étale entre deux feuilles avant le colaminage, par exemple entre deux feuilles d'aluminium. On remarquera qu'une telle couche métallique répond aux conditions posées quant aux irrégularités de surface 21 si sa granulométrie est supérieure ou égale à l'épaisseur de la couche d'alumine de la feuille d'aluminium 10.

La poudre métallique peut être une poudre d'acier, de fer, de nickel, de cobalt, de cuivre, d'un métal de structure cristallographique cubique à faces centrées (or, cuivre, argent, etc.), ou dans leurs alliages.

Nous allons, à présent, décrire des procédés de fabrication conformes à l'invention de manière plus détaillée, en prenant des exemples de feuilles métalliques et de reliefs pouvant être utilisés. Les exemples qui vont suivre ne sont cependant aucunement limitatifs et ne sont donnés qu'à titre d'illustration.

On notera par ailleurs que, quel que soit l'exemple de procédé décrit dans ce qui suit, les étapes de chauffe, de refroidissement et de colaminage restent les mêmes que dans le cadre du procédé de fabrication général précédemment décrit.

Pour un assemblage métallique 1 comprenant une feuille d'aluminium 10 et une feuille d'acier 20, le procédé peut en outre comprendre une étape supplémentaire de chauffe de la feuille d'acier à une température comprise entre 70% et 98% de sa température de fusion, par exemple 1100 °C, pendant une durée dépendant de l'épaisseur de la feuille, typiquement pendant 30 minutes pour une feuille 20 d'un millimètre d'épaisseur.

Le temps de chauffe dépend de la masse volumique, de la capacité thermique, de la conductivité thermique et de l'épaisseur de la feuille d'acier 20.

Dans cet exemple de réalisation, la feuille d'aluminium 10 est réalisée dans un alliage série 1000 et la feuille d'acier 20 est une feuille d'acier faiblement allié de XC10.

L'acier est alors refroidi jusqu'à la température de refroidissement de la feuille d'aluminium. A nouveau, comme pour la feuille d'aluminium 10, la durée du refroidissement et la température finale de l'acier refroidi ne sont pas des paramètres déterminants.

On décape alors mécaniquement ou chimiquement la feuille d'acier 20 de manière à ôter la couche d'oxydes présente en surface qui pourrait empêcher la formation d'un assemblage métallique 1 cohérent.

Selon une forme de réalisation, le décapage est réalisé par sablage. Etant donné que la surface de la feuille métallique 20 ne doit pas être régulière, la granulométrie du sablage n'a pas d'importance. Il faut en revanche contrôler la pression du sablage afin d'éviter les intrusions de grains d'abrasifs dans le métal.

En variante, le décapage est réalisé par attaque acide (par exemple avec de l'acide chlorhydrique), par brossage à la paille de fer, ou toute autre technique connue.

La feuille d'acier 20 ainsi obtenue est alors colaminée avec la feuille d'aluminium 10 traitée thermiquement, de préférence à froid et en une seule passe, dans un laminoir dont au moins l'un des cylindres présente une surface externe pourvue de reliefs.

L'assemblage métallique 1 ainsi obtenu présente alors des propriétés inattendues.

D'une part, l'assemblage métallique 1 cumule certaines des propriétés propres à l'aluminium et à l'acier pris séparément. Ainsi, il a été constaté que l'assemblage métallique 1 était ferromagnétique, et était capable d'attirer des aimants et de les maintenir en contact avec sa surface extérieure, tout en ayant une bonne conductivité électrique et une faible densité.

Par exemple, pour un assemblage métallique 1 comprenant un papier aluminium alimentaire de titre A5 et un déployé en nickel d'une épaisseur d'environ 1 mm, la perméabilité magnétique relative de l'assemblage est de l'ordre de 300, sa conductivité est proche de celle de l'aluminium (de l'ordre de 4,6 10⁺⁸ Ohm⁻¹.m⁻¹), sa résistance mécanique à la traction est de l'ordre de 10 MPa (ce qui est important pour une feuille 10 de si faible épaisseur, environ 100 microns), tandis que sa densité est de l'ordre de 4,7.

De la sorte, il devient possible d'utiliser l'assemblage métallique 1 aluminium-nickel obtenu selon le procédé de l'invention afin de réaliser des blindages électromagnétiques souples, légers et mécaniquement résistants suivant les épaisseurs choisies pour les feuilles d'aluminium 10 et métallique 20.

De plus, l'assemblage 1 peut subir un laminage successif (successfully rolling bonding) permettant de multiplier mécaniquement le nombre de couches à partir d'un seul assemblage initial. Ce multicouche possède alors des caractéristiques encore supérieures à l'assemblage initial notamment en termes de résistance mécanique (traction / déchirement) et magnétique par une meilleure répartition dans l'épaisseur.

De préférence, dans le cas d'un laminage successif, les premiers colaminages sont réalisés dans un laminoir à cylindres lisses, et seul le dernier colaminage est réalisé avec un ou plusieurs cylindres dont la surface présente des reliefs.

Par ailleurs, dans l'exemple de réalisation où la feuille métallique 20 est en acier, il est possible de n'utiliser qu'un laminoir à deux cylindres au lieu d'un laminoir conventionnel à quatre cylindres (ou plus), car l'assemblage 1 reste suffisamment aligné au cours du laminage.

D'autre part, des tests effectués sur un tel assemblage métallique 1 ont permis de constater qu'il résistait à la corrosion et au délaminage dans une ambiance en phase vapeur d'eau saturante à 210°C pendant 12 heures. De même, les assemblages obtenus ont résisté à des températures de 77K (environ -196°C) sans se délaminer.

Des essais ont également montré que les feuilles d'aluminium obtenues suite au traitement thermique mis en oeuvre dans la première étape du procédé selon l'invention présentaient une plus large gamme de températures d'utilisation (entre environ -200°C et +200°C, au lieu de -200°C et +150°C pour les tôles seules),

On notera cependant que le traitement thermique de la feuille métallique 20 n'est pas nécessaire pour tous les matériaux. Il a pour objectif d'adoucir mécaniquement le matériau la constituant.

Par exemple, dans le cadre de la fabrication d'un assemblage métallique 1 formé d'une feuille d'aluminium 10 interpénétrant une feuille 20 de nickel, de cuivre, d'or, ou de tout autre matériau cubique à faces centrées, l'étape de chauffe de la feuille métallique 20 est optionnelle, ainsi que son décapage en surface.

Par ailleurs, selon une forme de réalisation préférée, la feuille d'aluminium 10 est directement traitée thermiquement conformément au procédé conforme à l'invention, sans avoir subi au préalable une étape de pré-laminage. En effet, un tel pré-laminage pourrait conduire à des recristallisations primaires ou secondaires de l'aluminium et rendre plus difficile sont colaminage ultérieur.

Selon une deuxième forme de réalisation, la feuille métallique 20 peut être une feuille de cuivre 20, plus particulièrement une grille ou un déployé. Il suffit alors, après traitement thermique de la feuille d'aluminium, de colaminer en une seule passe et à froid dans le laminoir à cylindre(s) à relief(s) la feuille d'aluminium et la feuille de cuivre, en choisissant les reliefs appropriés en fonction de l'application industrielle de l'assemblage, pour obtenir l'assemblage métallique.

Cet assemblage métallique présente alors de nombreuses propriétés d'intérêt, typiquement son excellente conductivité (améliorée par rapport à la feuille d'aluminium initiale de par la présence de la feuille de cuivre), une faible densité, une excellente résistance à la corrosion, une grande rigidité dans la direction principale des reliefs, etc. ce qui la rend particulièrement adaptée à la fabrication d'électrodes pour pile à combustible par exemple, ou de tout autre assemblage métallique nécessitant une excellente conductivité et résistance à la corrosion tout en étant léger et rigide. Il est par ailleurs possible de réaliser de telles électrodes dans un laminoir dont l'un des cylindres est lisse, seule la surface de laminage du cylindre correspondant étant pourvue de reliefs.

L'assemblage peut en outre comporter une deuxième feuille de cuivre, disposée sur la face libre de la feuille d'aluminium et colaminée en même temps que les autres feuilles, afin d'améliorer encore la conductivité de l'assemblage final.

Selon une troisième forme de réalisation, et comme nous l'avons indiqué précédemment, le procédé selon l'invention permet également de réaliser un assemblage formé de deux feuilles d'aluminium qui s'interpénètrent. La feuille métallique 20 est donc ici la feuille d'aluminium supplémentaire.

Grâce à cette forme de réalisation, il devient donc possible de souder ensemble deux feuilles d'aluminium, ce qui n'était pas envisageable selon les techniques de soudage conventionnelles, notamment à cause de la barrière formée par la couche d'alumine.

Pour cela, le procédé de fabrication d'un assemblage métallique 1 de deux feuilles d'aluminium comprend simplement une étape supplémentaire de chauffe et de refroidissement de la feuille métallique (ici la feuille d'aluminium supplémentaire) par rapport au procédé général conforme à l'invention.

Plus précisément, les deux feuilles d'aluminium sont traitées thermiquement, simultanément ou successivement, puis refroidies, conformément aux deux premières étapes (chauffe puis refroidissement) du procédé général qui ont été précédemment détaillées.

On colamine ensuite les deux feuilles d'aluminium, de préférence à froid et en une seule passe, de manière à obtenir un assemblage métallique 1 comprenant deux feuilles d'aluminium qui s'interpénètrent, et présentant des reliefs complémentaire des reliefs du (des) cylindre(s).

Cet assemblage métallique 1 présente notamment des caractéristiques mécaniques accrues et les mêmes propriétés que chaque feuille d'aluminium prise séparément suite à son traitement thermique respectif. En particulier, il présente une résistance à la corrosion accrue (notamment dans l'acide nitrique à 68%), peut être soudé par points, utilisé dans une plus large gamme de températures, etc.

Selon une quatrième forme de réalisation, il est possible de souder une feuille d'aluminium additionnelle 10' à un assemblage métallique obtenu selon le procédé précédemment décrit.

Pour cela, on chauffe la feuille d'aluminium additionnelle 10' puis on la refroidit, conformément aux deux premières étapes du procédé, puis on colamine directement la feuille d'aluminium 10, la(les) feuille(s) métallique(s) 20 et la feuille d'aluminium additionnelle 10', de préférence à froid et en une seule passe, de manière à formée l'assemblage métallique final à reliefs comprenant au moins trois couches.

En variante, on peut aussi réitérer le procédé en colaminant la feuille d'aluminium additionnelle traitée thermiquement selon les deux premières étapes du procédé avec l'assemblage métallique obtenu selon le procédé préalablement décrit. Dans ce cas, on préfèrera alors colaminer l'assemblage métallique 1 de base (comprenant la feuille d'aluminium 10 et la feuille métallique 20) dans un laminoir à cylindres lisses afin d'obtenir un assemblage cohérent plan, et de ne colaminer dans le laminoir à cylindre(s) à reliefs que l'assemblage métallique final 1.

On peut ainsi obtenir par exemple un assemblage comprenant une feuille de cuivre 20 ou un déployé en acier 20 entre deux feuilles d'aluminium 10,10', comme illustré sur la figure 3, obtenu par colaminage simultané des feuilles 10, 10' et 20 avec le déployé 20 en une seule étape ou en réitérant les étapes du procédé.

Dans le cas où l'assemblage métallique 1 est réalisé avec une feuille 20 d'acier, de fer ou tout autre matériau énoncé précédemment, on doit, préalablement au colaminage, porter l'assemblage métallique 1 à une température comprise entre 80% et 100% de la température de fusion de la feuille d'aluminium conformément à la première étape du procédé précédemment décrit, pendant par exemple une trentaine de minutes.

En réitérant ces étapes de chauffe, refroidissement et colaminage, on peut ainsi obtenir des sandwiches comprenant plus de deux assemblages métalliques 1. Le nombre d'assemblage métalliques 1 empilés et le choix de la (ou des) feuille(s) métallique(s) 20, 20' dépend bien entendu des propriétés souhaitées pour le sandwich 2 et améliorent la résistance à la traction (par exemple, la résistance à la rupture est environ plus de trois fois plus élevée pour un assemblage aluminium-fer par rapport à de l'aluminium seul), typiquement de 50 à 150 MPa.

En variante, il est également possible de colaminer simultanément, en une seule passe et à froid dans le laminoir à cylindre(s) à reliefs, l'ensemble des feuilles constituant l'assemblage métallique final 1. Pour cela, on applique le traitement thermique à l'ensemble des feuilles d'aluminium conformément aux premières étapes du procédé général précédemment décrit, ainsi que le cas échéant les traitements thermique, de surface, etc. aux feuilles métalliques, puis on colamine à froid et en une seule passe dans le laminoir à cylindre(s) à reliefs l'empilement constituant l'assemblage métallique que l'on souhaite réaliser.

Selon une cinquième forme de réalisation, l'assemblage métallique 1 comporte en outre une couche de poudre métallique. De préférence, la couche métallique est enfermée entre au moins deux feuilles, typiquement entre deux feuilles d'aluminium, entre une feuille d'aluminium et une feuille métallique (comme illustré sur la figure 5) ou encore deux feuilles d'aluminium et une feuille métallique.

En variante, la couche de poudre est colaminée avec une feuille d'aluminium dans un laminoir à cylindres lisses puis seulement dans le laminoir à cylindre(s) à reliefs, de manière à obtenir un assemblage métallique cohérent ne comportant que la feuille d'aluminium et la poudre métallique, ou le cas échéant comprenant en outre une feuille métallique 20, et présentant les reliefs complémentaires des cylindres du laminoir.

Le procédé peut alors comporter en outre une étape supplémentaire de traitement thermique de la poudre métallique 22 préalablement à l'étape de colaminage.

En effet, des essais ont démontré que la déshydratation des poudres 22 permettait d'améliorer la cohésion de l'assemblage métallique 1 obtenu. En effet, la surface spécifique des éléments constitutifs de la poudre 22 est supérieure à celle des feuilles d'aluminium et métalliques. Ainsi, le niveau d'hydratation peut devenir important quant au résultat final obtenu, en particulier lorsque l'assemblage 1 est utilisé à des températures supérieures à 100°C, la vapeur d'eau créant des points de délamination par surpression locale interne.

En effet, généralement, les poudres métalliques peuvent présenter de l'ordre de 15% en poids d'eau, ce qui peut devenir gênant notamment lors de traitements de vieillissement, la vapeur saturante provoquant le délaminage des feuilles.

Pour de meilleurs résultats, il est donc préférable de réaliser le traitement thermique de la couche 20 de poudre métallique de sorte que le degré d'hydratation de la poudre 22 soit suffisamment faible (typiquement inférieur à 1% d'eau superficielle et d'eau liée) pour réduire la vapeur saturante aux interfaces lors du colaminage avec la feuille d'aluminium 10.

Le temps de chauffe, de préférence sous vide, dépend à nouveau de la masse volumique, de la capacité thermique, de la conductivité thermique et de l'épaisseur de la couche métallique 20.

Par exemple, dans le cas d'une couche 20 de poudre de fer, le traitement thermique dure entre environ trente minutes et deux heures à 300°C, de manière à sécher totalement la poudre 22. Néanmoins, un séchage partiel à 120°C pendant une soixantaine de minutes sous vide peut suffire pour certains types de poudres 22 peu hydrophiles.

Par exemple, une poudre d'alumine déshydratée ne comprend généralement que 4% d'eau superficielle et 10% d'eau liée. De la sorte, un simple prétraitement thermique permet de réduire suffisamment son degré d'hydratation pour obtenir de bons résultats lors du colaminage avec la feuille d'aluminium 10 et limiter les risques de délaminage.

La couche de poudre métallique ainsi obtenue est alors colaminée avec la feuille d'aluminium 10 traitée thermiquement, de préférence à froid et en une seule passe dans un laminoir à cylindres lisses, ou entre deux feuilles dans le laminoir à cylindre(s) à reliefs.

Cette étape de colaminage de la feuille d'aluminium 10 avec la poudre métallique et le cas échéant les feuilles métalliques additionnelles est de préférence réalisée consécutivement à la déshydratation de la poudre 22, par exemple dans les minutes qui suivent, afin d'éviter la reprise d'humidité de la poudre 22. Le cas échéant, un nouveau traitement thermique est possible afin de déshydrater à nouveau la poudre 22.

A nouveau, le colaminage est effectué de préférence à froid et en une seule passe.

Par ailleurs, la quantité de poudre peut être variable en fonction de l'application désirée. Il est en effet possible d'appliquer une très fine couche de poudre, une couche discontinue de poudre, une couche complète, voire plusieurs épaisseurs de poudres. Le résultat obtenu dépend alors du rapport entre la granulométrie de la poudre 22 et la quantité de poudre 22 appliquée. Une couche très fine, présentant une épaisseur minimale de l'ordre de cinq microns, comprendra par exemple de la poudre 22 atomisée présentant un effet de bille qui rend le colaminage difficile. Au contraire, une couche épaisse, pouvant avoir jusqu'à deux millimètres d'épaisseur, comprendra par exemple de la poudre 22 angulaire qui est facile à colaminer.

L'assemblage métallique 1 ainsi obtenu présente alors des propriétés inattendues, notamment de bonnes caractéristiques mécaniques par rapport à une feuille d'aluminium seule, et une grande stabilité dans le temps.

En effet, l'assemblage métallique 1 cumule certaines des propriétés propres à l'aluminium et au métal constitutif de la poudre pris séparément. Ainsi, dans le cas d'une poudre de fer, il a été constaté que l'assemblage métallique 1 était ferromagnétique, et était capable d'attirer des aimants et de les maintenir en contact avec sa surface extérieure, tout en ayant une bonne conductivité électrique et une faible densité.

Le procédé selon l'invention permet donc de fabriquer des sandwiches comprenant au moins un assemblage métallique et une feuille additionnelle, métallique ou en aluminium.

Il peut s'agir d'un empilement comprenant, par exemple : une feuille métallique (notamment un déployé) et de la poudre métallique (notamment de la poudre de nickel) emprisonnées entre deux feuilles d'aluminium, une feuille d'aluminium emprisonnée entre deux feuilles métalliques (notamment deux grilles de cuivre), etc.

Par exemple, pour un sandwich métallique 2 comprenant deux tôles d'aluminium de titre A5 de 0,8 millimètres d'épaisseur (10) et (10') renfermant un déployé d'acier XC10 d'épaisseur 0,8mm (20'), l'épaisseur du sillon du sandwich obtenu a une épaisseur d'environ 0,8 millimètres, une perméabilité magnétique relative d'environ 100, une densité de 3,2 et une conductivité électrique d'environ 4,4 10⁺⁸ Ohm-¹.m⁻¹. Par ailleurs, lorsque les motifs sont des sillons longitudinaux (ayant une largeur dans le plan de l'assemblage (dans le sens transversal à la direction de laminage, correspondant à la direction principale des sillons) de l'ordre de 2 mm pour une hauteur de l'ordre de 1.5 mm) :
- la résistance mécanique à la traction longitudinale (c'est-à-dire dans la direction principale des sillons) du sandwich est de l'ordre du triple de celle d'une tôle d'aluminium de même épaisseur et non traitée, qui est généralement comprise entre 25 et 80 MPa suivant son état métallurgique, et
- la résistance à la flexion selon un axe transversal aux sillons est d'au moins cinq à dix fois supérieure à celle d'une tôle d'aluminium de même encombrement et non traitée est de l'ordre de 60 MPa suivant son état métallurgique

Avantageusement, un sandwich 2 comprenant deux feuilles d'aluminium 10, 10' renfermant une feuille d'acier 20 présente des propriétés de résistance à la corrosion surprenantes et une importante résistance au délaminage. Ainsi, l'immersion d'un tel sandwich 2 dans un bain d'azote liquide à 77 K (-196°C) a montré que le sandwich 2 restait cohérent malgré les coefficients de dilatation différents de l'aluminium et de l'acier.

Par ailleurs, le sandwich 2 selon l'invention est capable de résister à une attaque d'acide nitrique concentré à 68% pendant plusieurs jours. Seule la feuille métallique 20 est attaquée si les flans du sandwich 2 ne sont pas protégés, c'est-à-dire si la feuille métallique 20 renfermée par les feuilles d'aluminium 10, 10' est en contact avec l'acide.

L'étanchéité de la partie centrale métallique 20 du sandwich est en revanche plus facile à obtenir lorsqu'il comprend de la poudre. Il suffit en effet de ne pas mettre de poudre sur les bords des feuilles d'aluminium 10, 10' lors du colaminage. On évite alors tout délaminage par oxydation de la partie centrale métallique.

Les sandwiches peuvent en outre être réalisés avec plusieurs types de feuilles métalliques différentes et/ou de la poudre métallique, afin de cumuler certaines propriétés d'intérêt. Par exemple, la fabrication d'un assemblage métallique 1 comprenant une feuille d'acier avec un assemblage métallique 1 comprenant une feuille de nickel permet d'obtenir un sandwich comprenant à la fois de l'aluminium, de l'acier et du nickel, afin d'adapter la conductivité, la perméabilité magnétique, et la densité, par exemple à l'application désirée.

Avantageusement, le procédé selon l'invention permet d'obtenir des assemblages métalliques 1 et sandwiches de feuilles métalliques récupérables facilement par fusion. En effet, il est possible de séparer et récupérer par gravité le composant de l'assemblage métallique 1 ayant la température de fusion la plus basse. Dans le cas d'un sandwich mixte, comprenant plus d'un matériau différent pour les feuilles métalliques, il suffit alors de réitérer l'opération jusqu'à ce qu'il ne reste plus qu'un type de matériau.

Par ailleurs, le procédé a un faible coût énergétique grâce à l'étape de colaminage à froid et la durée réduite du traitement thermique.

## Revendications

1. Procédé de fabrication d'un assemblage métallique comprenant une première feuille à base d'aluminium et au moins une deuxième feuille métallique, comprenant les étapes consistant à :
- traiter thermiquement la feuille d'aluminium (10) en la portant à une température comprise entre 80% et 100% de la température de fusion du matériau la constituant pendant une durée comprise entre une vingtaine de minutes et environ deux heures pour créer et stabiliser une couche d'alumine alpha par transformation allotropique de la couche d'oxyde présente en surface de ladite feuille d'aluminium (10), puis en la laissant refroidir ;
- prévoir une feuille métallique (20) ayant une ductilité inférieure ou égale à la ductilité de la feuille d'aluminium (10) après refroidissement, ladite feuille (20) présentant des irrégularités de surface (21) d'une profondeur supérieure ou égale à l'épaisseur de la couche d'alumine alpha ; et
- colaminer dans un laminoir la feuille d'aluminium (10) et la feuille métallique (20) afin d'obtenir l'assemblage métallique (1),
**caractérisé en ce que** le laminoir comprend au moins un cylindre dont la surface externe de laminage est pourvue de reliefs.

2. Procédé selon la revendication 1, dans lequel le colaminage est réalisé à froid.

3. Procédé selon l'une des revendications 1 et 2, dans lequel le colaminage est réalisé en une seule passe.

4. Procédé selon l'une des revendications 1 à 3, dans lequel les reliefs sont des sillons rectilignes, dentés, crénelés, et/ou sinueux ou des croix.

5. Procédé selon l'une des revendications 1 à 4, dans lequel la surface externe de laminage de deux cylindres complémentaires du laminoir présente des reliefs identiques en opposition de phase lors du colaminage.

6. Procédé selon l'une des revendications 1 à 5, dans lequel la feuille métallique (20) est constituée par l'un des éléments du groupe suivant : une grille métallique, un déployé métallique, une mousse métallique, une structure métallique en nids d'abeilles, des câbles métalliques, ou une feuille métallique rugueuse.

7. Procédé selon l'une des revendications 1 à 6, dans lequel la feuille métallique (20) est réalisée dans l'un des matériaux du groupe suivant :
acier, fer, nickel, cobalt, cuivre, métal de structure cristallographique cubique à faces centrées, ou leurs alliages.

8. Procédé selon la revendication 7, comprenant en outre les étapes suivantes préalablement à l'étape de colaminage des feuilles (10, 20) :
- chauffer la feuille métallique (20) à une température comprise entre environ 70% et 98% de la température de fusion du métal la constituant ; et
- laisser refroidir la feuille (20) jusqu'à température ambiante.

9. Procédé selon la revendication 8, comprenant en outre une étape au cours de laquelle la feuille métallique (20) est décapée entre les étapes de refroidissement et de colaminage.

10. Procédé selon l'une des revendications 1 à 6, dans lequel la feuille métallique (20) est une feuille d'aluminium supplémentaire, ledit procédé comprenant en outre, préalablement à l'étape de colaminage des feuilles, les étapes suivantes :
- porter la feuille d'aluminium supplémentaire (20) à une température comprise entre 80% et 100% de la température de fusion du matériau la constituant pendant une durée comprise entre une vingtaine de minutes et environ deux heures pour créer et stabiliser une couche d'alumine alpha à la surface de ladite feuille d'aluminium ; et
- laisser refroidir la feuille d'aluminium supplémentaire (20).

11. Procédé selon l'une des revendications 1 à 10, comprenant en outre une étape d'assemblage des feuilles d'aluminium (10) et métallique(s) (20) préalablement à leur colaminage.

12. Procédé selon l'une des revendications 1 à 11, dans lequel on colamine en outre une feuille métallique supplémentaire (10', 20') avec les feuilles d'aluminium (10) et métallique (20).

13. Procédé selon la revendication 12, dans lequel les deux feuilles métalliques (20, 20') et la feuille d'aluminium (10) sont colaminées simultanément en une seule étape.

14. Procédé selon la revendication 13, dans lequel la feuille d'aluminium (10) et la feuille métallique (20) sont d'abord colaminées dans un laminoir à cylindres lisses afin d'obtenir un assemblage plan, ledit assemblage plan étant ensuite colaminé avec la feuille métallique supplémentaire (20') dans le laminoir à cylindre(s) à reliefs afin d'obtenir l'assemblage métallique.

15. Procédé selon l'une des revendications 1 à 14, comprenant en outre une étape d'application d'une couche de poudre sur la feuille d'aluminium préalablement à l'étape de colaminage, la feuille d'aluminium et la poudre étant colaminées dans un laminoir à cylindres lisses afin d'obtenir un assemblage plan, ledit assemblage plan étant ensuite colaminé avec la feuille métallique dans le laminoir comprenant au moins un cylindre dont la surface externe de laminage est pourvue de reliefs afin d'obtenir l'assemblage métallique.

16. Procédé selon la revendication 15, comprenant en outre une étape supplémentaire de déshydratation de la poudre métallique (22) préalablement à son application sur la feuille d'aluminium.

17. Procédé de fabrication d'un échangeur thermique, **caractérisé en ce qu'**il comprend une étape de mise en forme d'une feuille d'aluminium avec au moins une feuille métallique selon un procédé de fabrication selon l'une des revendications 1 à 16 dans un laminoir comprenant un premier cylindre dont la surface externe de laminage présente des sillons s'étendant longitudinalement à la direction de laminage, et un deuxième cylindre dont la surface externe de laminage est lisse ou présente des sillons en opposition de phase avec les sillons du premier cylindre.

## Patentansprüche

1. Verfahren zur Herstellung eines Metallverbunds, umfassend ein erstes Blech auf der Basis von Aluminium und mindestens ein zweites Metallblech, umfassend die folgenden Schritte:
- thermisches Behandeln des Aluminiumblechs (10) durch Bringen auf eine Temperatur zwischen 80 % und 100 % inklusive der Schmelztemperatur des Materials, das es bildet, während einer Dauer zwischen zirka zwanzig Minuten und zirka zwei Stunden inklusive, um durch allotropische Transformation der auf der Oberfläche des Aluminiumblechs (10) vorhandenen Oxidschicht eine Alpha-Aluminiumoxidschicht zu bilden und zu stabilisieren, sie danach abkühlen lassen;
- Bereitstellen eines Metallblechs (20) mit einer Duktilität unter oder gleich der Duktilität des Aluminiumblechs (10) nach dem Abkühlen, wobei das Blech (20) Oberflächenunregelmäßigkeiten (21) mit einer Tiefe von über oder gleich der Stärke der Alpha-Aluminiumoxidschicht aufweist; und
- gemeinsames Walzen, in einer Walzstraße, des Aluminiumblechs (10) und des Metallblechs (20), um den Metallverbund (1) zu erhalten,
**dadurch gekennzeichnet, dass** die Walzstraße mindestens einen Zylinder umfasst, dessen äußere Walzoberfläche mit Reliefs ausgestattet ist.

2. Verfahren nach Anspruch 1, wobei das gemeinsame Walzen kalt durchgeführt wird.

3. Verfahren nach einem der Ansprüche 1 und 2, wobei das gemeinsame Walzen in einem einzigen Durchgang durchgeführt wird.

4. Verfahren nach einem der Ansprüche 1 bis 3, wobei die Reliefs gerade, gezahnte, gezackte und/oder gewundene Rillen oder Kreuze sind.

5. Verfahren nach einem der Ansprüche 1 bis 4, wobei die äußere Walzoberfläche von zwei komplementären Zylindern der Walzstraße beim gemeinsamen Walzen identische Reliefs in Phasenopposition aufweist.

6. Verfahren nach einem der Ansprüche 1 bis 5, wobei das Metallblech (20) von einem der Elemente der folgenden Gruppe gebildet ist: von einem Metallgitter, von einer Metallauffaltung, von einem Metallschaumstoff, von einer Bienenwaben-Metallstruktur, von Metallkabeln oder von einem rauen Metallblech.

7. Verfahren nach einem der Ansprüche 1 bis 6, wobei das Metallblech (20) aus einem der Materialen der folgenden Gruppe hergestellt ist: Stahl, Eisen, Nickel, Kobalt, Kupfer, Metall mit kubischer kristallographischer Struktur und zentrierten Flächen oder deren Legierungen.

8. Verfahren nach Anspruch 7, umfassend ferner die folgenden Schritte vor dem Schritt des gemeinsamen Walzens der Bleche (10, 20):
- Erwärmen des Metallblechs (20) auf eine Temperatur zwischen zirka 70 % und 98 % inklusive der Schmelztemperatur des Metalls, das es bildet; und
- Abkühlen lassen des Blechs (20) bis auf Raumtemperatur.

9. Verfahren nach Anspruch 8, umfassend ferner einen Schritt, bei dem das Metallblech (20) zwischen den Schritten Abkühlen und gemeinsames Walzen abgebeizt wird.

10. Verfahren nach einem der Ansprüche 1 bis 6, wobei das Metallblech (20) ein zusätzliches Aluminiumblech ist, wobei das Verfahren ferner vor dem Schritt des gemeinsamen Walzens der Bleche die folgenden Schritte umfasst:
- Bringen des zusätzlichen Aluminiumblechs (20) auf eine Temperatur zwischen 80 % und 100 % inklusive der Schmelztemperatur des Materials, das es bildet, während einer Dauer zwischen zirka zwanzig Minuten und zirka zwei Stunden inklusive, um auf der Oberfläche des Aluminiumblechs eine Alpha-Aluminiumoxidschicht zu bilden und zu stabilisieren; und
- Abkühlen lassen des zusätzlichen Aluminiumblechs (20).

11. Verfahren nach einem der Ansprüche 1 bis 10, umfassend einen Verbindungsschritt der Aluminium- (10) und Metallbleche (20) vor ihrem gemeinsamen Walzen.

12. Verfahren nach einem der Ansprüche 1 bis 11, wobei ferner mit den Aluminium- (10) und Metallblechen (20) ein zusätzliches Metallblech (10', 20') gemeinsam gewalzt wird.

13. Verfahren nach Anspruch 12, wobei die zwei Metallbleche (20, 20') und das Aluminiumblech (10) gleichzeitig in einem einzigen Schritt gemeinsam gewalzt werden.

14. Verfahren nach Anspruch 13, wobei das Aluminiumblech (10) und das Metallblech (20) zunächst in einer Walzstraße mit glatten Zylindern gemeinsam gewalzt werden, um einen ebenen Verbund zu erhalten, wobei der ebene Verbund dann mit dem zusätzlichen Metallblech (20') in einer Walzstraße mit Reliefzylinder(n) gemeinsam gewalzt wird, um den Metallverbund zu erhalten.

15. Verfahren nach einem der Ansprüche 1 bis 14, umfassend ferner einen Schritt des Auftragens einer Pulverschicht auf das Aluminiumblech vor dem Schritt des gemeinsamen Walzens, wobei das Aluminiumblech und das Pulver in einer Walzstraße mit glatten Zylindern gemeinsam gewalzt werden, um einen ebenen Verbund zu erhalten, wobei der ebene Verbund dann mit dem Metallblech in einer Walzstraße gemeinsam gewalzt wird, die mindestens einen Zylinder umfasst, dessen äußere Walzoberfläche mit Reliefs ausgestattet ist, um den Metallverbund zu erhalten.

16. Verfahren nach Anspruch 15, umfassend ferner einen zusätzlichen Dehydrierungsschritt des Metallpulvers (22) vor seinem Auftragen auf das Aluminiumblech.

17. Verfahren zur Herstellung eines Wärmetauschers, **dadurch gekennzeichnet, dass** es einen Formungsschritt eines Aluminiumblechs mit mindestens einem Metallblech gemäß einem Herstellungsverfahren nach einem der Ansprüche 1 bis 16 in einer Walzstraße umfasst, umfassend einen ersten Zylinder, dessen äußere Walzoberfläche Rillen aufweist, die sich längs in Walzrichtung erstrecken, und einen zweiten Zylinder, dessen äußere Walzoberfläche glatt ist oder Rillen in Phasenopposition mit den Rillen des ersten Zylinders aufweist.

## Claims

1. A method of manufacturing a metal assembly comprising a first sheet based on aluminum and at least one second metal sheet, comprising the steps of:
- heat treating the aluminum sheet (10) by raising it to a temperature between 80% and 100% of the melting temperature of the material constituting it for a duration between around twenty minutes and approximately two hours in order to create and stabilize an alpha alumina layer by allotropic transformation of the oxide layer present on the surface of said aluminum sheet (10), and then allowing it to cool;
- providing a metal sheet (20) having a ductility less than or equal to the ductility of the aluminum sheet (10) after cooling, said sheet (20) having surface irregularities (21) with a depth greater than or equal to the thickness of the alpha alumina layer; and
- roll bonding the aluminum sheet (10) and the metal sheet (20) in a rolling mill in order to obtain the metal assembly (1),
**characterized in that** the rolling mill comprises at least one cylinder, the external rolling surface of which is provided with reliefs.

2. The method according to claim 1, wherein the roll bonding is carried out cold.

3. The method according to one of claims 1 and 2, wherein the roll bonding is carried out in a single pass.

4. The method according to one of claims 1 to 3, wherein the reliefs are rectilinear, toothed, crenellated and/or sinuous furrows or are crosses.

5. The method according to one of claims 1 to 4, wherein the external rolling surface of two complementary cylinders of the rolling mill have identical reliefs in phase opposition during the roll bonding.

6. The method according to one of claims 1 to 5, wherein the metal sheet (20) is constituted by one of the elements of the following group: a metal grating, a metal lattice, a metal foam, a metal honeycomb structure, metal cables, or a rough metal sheet.

7. The method according to one of claims 1 to 6, wherein the metal sheet (20) is produced from one of the materials of the following group: steel, iron, nickel, cobalt, copper, metal with a cubic crystallographic structure with centered faces, or alloys thereof.

8. The method according to claim 7, further comprising the following steps prior to the step of roll bonding of the sheets (10, 20):
- heating the metal sheet (20) to a temperature of between approximately 70% and 98% of the melting temperature of the metal constituting it; and
- allowing the sheet (20) to cool to room temperature.

9. The method according to claim 8, further comprising a step during which the metal sheet (20) is stripped between the cooling and roll bonding steps.

10. The method according to one of claims 1 to 6, wherein the metal sheet (20) is a supplementary aluminum sheet, said method further comprising, prior to the step of roll bonding of the sheets, the following steps:
- raising the supplementary aluminum sheet (20) to a temperature of between 80% and 100% of the melting temperature of the material constituting it for a duration between around twenty minutes and approximately two hours to create and stabilize an alpha alumina layer on the surface of said aluminum sheet; and
- allowing the supplementary aluminum sheet (20) to cool.

11. The method according to one of claims 1 to 10, further comprising a step of assembling the aluminum (10) and metal (20) sheets prior to roll bonding thereof.

12. The method according to one of claims 1 to 11, wherein a supplementary metal sheet (10', 20') is further roll bonded with the aluminum (10) and metal (20) sheets.

13. The method according to claim 12, wherein the two metal sheets (20, 20') and the aluminum sheet (10) are roll bonded simultaneously in a single step.

14. The method according to claim 13, wherein the aluminum sheet (10) and the metal sheet (20) are first roll bonded in a rolling mill with smooth cylinders in order to obtain a planar assembly, said planar assembly then being roll bonded with the supplementary metal sheet (20') in the rolling mill with cylinder(s) with reliefs in order to obtain the metal assembly.

15. The method according to one of claims 1 to 14, further comprising a step of applying a layer of powder to the aluminum sheet prior to the roll bonding step, wherein the aluminum sheet and the powder are roll bonded in a rolling mill with smooth cylinders in order to obtain a planar assembly, said planar assembly then being roll bonded with the metal sheet in the rolling mill comprising at least one cylinder, the external rolling surface of which is provided with reliefs in order to obtain the metal assembly.

16. The method according to claim 15, further comprising a supplementary step of dehydration of the metal powder (22) prior to application thereof to the aluminum sheet.

17. A method of manufacturing a heat exchanger, **characterized in that** it comprises a step of forming an aluminum sheet with at least one metal sheet according to a manufacturing method according to one of claims 1 to 16 in a rolling mill comprising a first cylinder the external rolling surface of which has furrows extending longitudinally to the rolling direction, and a second cylinder the external rolling surface of which is smooth or has furrows in phase opposition with the furrows of the first cylinder.
